# DEMANDE DE BREVET EUROPEEN

(11) **EP 2 818 603 A1**
(43) Date de publication de la demande: **31.12.2014**
(21) Numéro de dépôt: 14172622.4
(22) Date de dépôt: 16.06.2014
(51) Int. Cl.: E03F 5/18, G21F 9/06, G21F 9/12

(54) **Système de prévention des fuites pour un bassin de rétention et procédé y relatif**

(30) Priorité: 24.06.2013 FR 1356000
(71) Demandeur: SOLETANCHE FREYSSINET, 92500 Rueil Malmaison (FR)
(72) Inventeur: Lacazedieu, Marc, 75013 Paris (FR)
(74) Mandataire: Cabinet Plasseraud

(57) **Abrégé**

Système de prévention des fuites pour un bassin (10) de rétention de liquides polluants, le système comprenant une membrane supérieure (3) destinée à être recouverte par le liquide (1), une membrane inférieure (4) agencée sur le fond du bassin et jointe de manière étanche à la membrane supérieure sur une portion périphérique pour former ainsi une enveloppe normalement étanche (20) délimitée par les deux membranes, ladite enveloppe étant remplie de matériau drainant (2), une pluralité de passages ou drains (6) agencés horizontalement dans le matériau drainant, un dispositif de pompage (5) adapté pour générer un vide d'air dans les drains, pour aspirer du liquide de fuite ayant pu traverser la membrane supérieure, moyennant quoi on évite de polluer le sol environnant au cas où une fuite de liquide au travers de la membrane supérieure interviendrait.

## Description

La présente invention est relative aux systèmes de prévention des fuites pour des bassins de rétention, en particulier pour des bassins contenant des matières ou produits pouvant être polluants ou contaminants.

De tels bassins de rétention sont utilisés pour stocker provisoirement, ou sur de longues durées, divers produits, qu'ils soient des résidus industriels, des produits de décharge ou poubelliens, les dits produits pouvant contenir des éléments solides mais aussi des éléments liquides.

Plus particulièrement, l'invention peut s'appliquer à des bassins de rétention de liquides contaminants, notamment radioactifs.

Les contraintes environnementales exigent de limiter, voire d'éviter complètement une contamination potentielle du terrain sur lequel est disposé le bassin.

Un tel bassin est conçu soit par excavation, soit par érection de talus périphériques de délimitation, le bassin comprenant dans les deux cas un fond concave. Un tel bassin présente le plus souvent une forme générale rectangle avec des dimensions horizontales de plusieurs dizaines ou centaines de mètres et une profondeur de quelques mètres.

Dans l'art connu, on dispose une ou plusieurs membranes sur le fond du bassin avant d'y déposer des produits à stocker, de manière à ce que les liquides soient bien retenus et ne pénètrent pas dans le terrain sous la membrane.

Il s'avère que les membranes en question peuvent être sujettes à une fuite, notamment en raison du fait que de telles membranes sont constituées par plusieurs bandes de matière plastique reliées les unes aux autres par des soudures.

On connaît aussi, du document GB2289493, des systèmes basés sur un réseau de poches formant une protection compartimentée avec gestion individuelle des compartiments ; toutefois, à l'endroit de la jonction entre les compartiments, le risque de fuite n'est pas vraiment éliminé. Même si on forme, préalablement à l'installation de la membrane, une couche de maçonnerie au mortier ou à la bentonite, ceci ne résout pas vraiment le problème car des fissures peuvent apparaitre tôt ou tard dans cette couche, du fait vu vieillissement ou des mouvements ou tremblements de terrain.

Le fait d'installer plusieurs membranes ne résout pas vraiment le problème car chacune est soumise au risque de fuite.

Il est donc apparu un besoin de proposer une solution qui permette de diminuer les risques de contamination du sol compte tenu des défauts potentiels des membranes usuelles.

A cet effet, l'invention propose un système de prévention des fuites pour un bassin de rétention de liquides, en particulier de liquides polluants ou contaminants, le système comprenant :
- un dispositif d'étanchéité comprenant une membrane supérieure destinée à être recouverte par le liquide, une membrane inférieure posée continument sur toute la surface du fondement du bassin et jointe de manière étanche à la membrane supérieure sur une portion périphérique pour former ainsi une enveloppe normalement étanche délimitée par les deux membranes, ladite enveloppe étant remplie d'une couche continue de matériau drainant,
- au moins un dispositif de pompage adapté pour générer un vide d'air au moins partiel, (c'est-à-dire une pression inférieure à la pression atmosphérique),
- une pluralité de drains disposés sensiblement horizontalement dans le matériau drainant, en communication fluide avec le dispositif de pompage, de manière à pouvoir aspirer du liquide de fuite ayant pu traverser la membrane supérieure, moyennant quoi on évite de polluer le sol environnant au cas où une fuite de liquide au travers de la membrane supérieure interviendrait. Ceci s'avère particulièrement judicieux dans le cas où des objets solides ayant des arêtes vives sont déposés dans le bassin de rétention.

Grâce à ces dispositions, en cas de fuite de la membrane supérieure, le liquide fuitant au travers de la membrane supérieure est récupéré par le pompage et ne risque pas de pénétrer dans le sol au travers de la membrane inférieure. Ceci s'avère efficace quelle quel que soit la position de la fuite potentielle.

Autrement dit on accepte le risque de présence d'une fuite dans la membrane, mais on en compense les effets par le dispositif de pompage et on élimine ainsi les risques de pollution du sol, à court, moyen et long terme.

Dans des modes de réalisation du système selon l'invention, on peut éventuellement avoir recours en outre à l'une et/ou à l'autre des dispositions suivantes :
- le système peut être configuré de manière à ce que le dispositif de pompage rejette le liquide de fuite dans le bassin de rétention ; ainsi on réinjecte le liquide fuitant dans le bassin et la contamination reste contenue dans le bassin lui-même ;
- le système peut comprendre un capteur de pression, le système étant configuré pour générer une activation cyclique du pompage, de préférence avec un rapport cyclique dépendant de l'évolution de la pression dans l'enveloppe; moyennant quoi on optimise la dépense d'énergie pour maintenir en permanence un vide d'air suffisant pour réaliser un pompage ;
- le système peut comprendre en outre un collecteur entre les drains et la pompe, et un clapet anti retour entre le collecteur et la pompe, prévu pour se fermer dès lors que la génération de vide s'interrompt, ce qui maintient un pression de vide ; moyennant quoi, on maintient un vide d'air dans l'enveloppe étanche d'autant plus longtemps que les fuites sont minimes, infimes ou inexistantes ;

- le matériau drainant peut être un complexe drainant préfabriqué macroporeux ; moyennant quoi le dispositif d'étanchéité est très rapide à installer, et en outre il n'est pas nécessaire d'acheminer du matériau tel que du sable sur le site ;
- le matériau drainant peut être un matériau granuleux tel que du sable ; ce qui est une solution conventionnelle bien maîtrisée, le sable étant disponible à proximité de la majorité des chantiers ;
- les passages sont des drains sous forme de tuyaux percés ou poreux ; ce qui est une solution de drainage conventionnelle et bien maîtrisée,
- les drains sont disposés parallèlement les uns aux autres, à une distance entre 30 cm et 3m, et sont reliés à un collecteur en communication avec l'admission du dispositif de pompage ; de sorte qu'on assure un pompage efficace d'une fuite potentielle quelle que soit sa localisation dans la membrane supérieure, en utilisant les propriétés de capillarité du sable ou du matériau drainant ;
- le dispositif de pompage peut comprendre une chambre de séparation, une pompe à vide d'air et une pompe de refoulement de liquide, avec un capteur de niveau de liquide pour piloter l'activation de la pompe de refoulement de liquide ; de sorte que le dispositif de pompage est adapté pour pomper de l'air et/ou du liquide, et pour séparer le liquide afin de le rejeter dans un endroit adéquat ;

L'invention a également pour objet un procédé utilisé pour un système de prévention des fuites tel que décrit ci-dessus, le procédé comprenant les étapes suivantes :
**a-** disposer une première membrane au fond du bassin, formant une membrane inférieure,
**b-** disposer au-dessus une couche continue de matériau drainant, avec des passages drainants,
**c-** disposer au-dessus une deuxième membrane formant une membrane supérieure, la raccorder de manière étanche en périphérie à la première membrane pour former une enveloppe normalement étanche,
**d -** agencer un dispositif de pompage et effectuer un pompage depuis les passages drainants.

D'autres caractéristiques et avantages de l'invention apparaîtront au cours de la description suivante de deux de ses formes de réalisation, données à titre d'exemples non limitatifs, en regard des dessins joints.

Sur les dessins :
- la figure 1 est une vue générale en coupe d'un premier mode de réalisation du système de prévention des fuites d'un bassin de rétention selon l'invention,
- la figure 2 est une vue partielle de dessus du système de la figure 1,
- la figure 3 montre une vue schématique du dispositif de pompage,
- la figure 4 montre des chronogrammes illustrant le fonctionnement du système,
- la figure 5 montre un second mode de réalisation selon l'invention.

Sur les différentes figures, les mêmes références désignent des éléments identiques ou similaires. Par souci de clarté, les proportions des différents éléments représentés ne sont pas nécessairement à l'échelle.

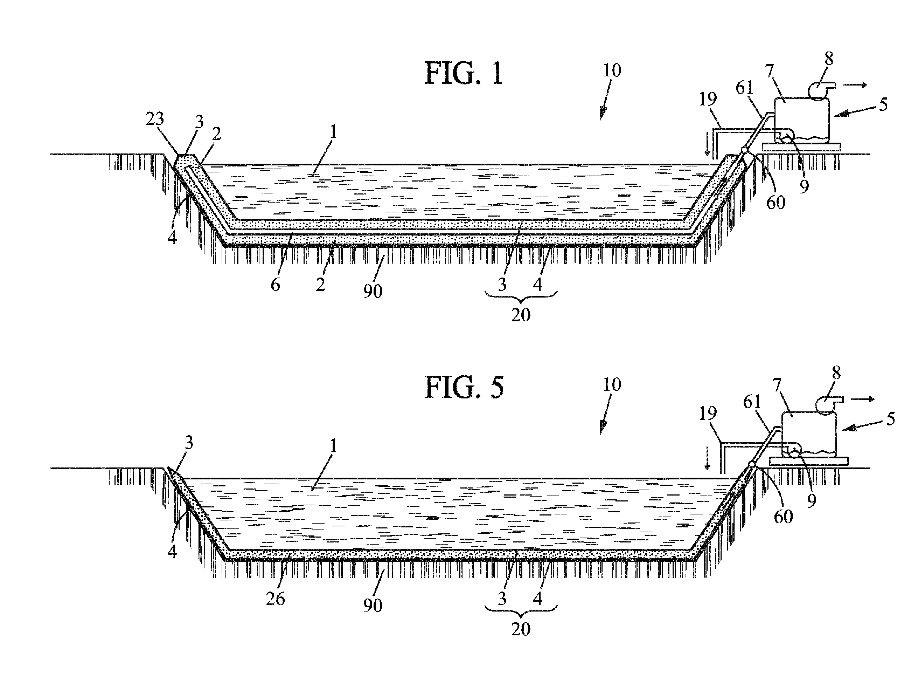

La figure 1 représente un bassin de rétention 10 contenant du liquide **1** polluant ou contaminant. Le liquide en question peut être un résidu industriel comprenant des produits chimiques ou radioactifs que l'on souhaite confiner dans un tel bassin de rétention. Il faut noter que l'invention s'applique tout aussi bien lorsque le bassin de rétention est destiné à stocker des produits solides duquel peuvent s'échapper des liquides contaminants ou polluants.

Dans le cas illustré, le bassin est formé par excavation dans le sol, la forme concave ainsi obtenue présente un fondement référencé **90.** Toutefois, une telle forme peut aussi être obtenue en érigeant des talus tout autour du bassin à former.

Avant de déposer du liquide dans le bassin, on installe un dispositif d'étanchéité sur le fond du bassin. En l'occurrence, on dispose tout d'abord une première membrane, ici nommée membrane inférieure **4** sur le fondement 90 du bassin. Cette membrane est réalisée en matière synthétique telle que du PVC, du PEHD ou autre matériau plastique équivalent. Cette membrane forme une paroi souple, encore appelé 'bâche', qui forme une barrière normalement étanche aux liquides. Cependant, compte tenu des grandes dimensions habituelles de ce type de bassin, la membrane est formée par la juxtaposition de plusieurs bandes de matériaux de type PVC qui sont reliées les unes aux autres par des soudures à chaud, par un procédé de thermocollage connu en soi. Malgré le soin apporté à ces soudures, qui peuvent être d'ailleurs souvent en pratique doublées, il peut exister des imperfections qui conduisent à un passage non désiré de liquide, c'est-à-dire une fuite.

Une fois que la membrane inférieure **4** est posée de manière continue sur toute la surface du fond du bassin, on procède à l'installation d'une première couche d'un matériau drainant **2** en l'occurrence un matériau granuleux tel que du sable.

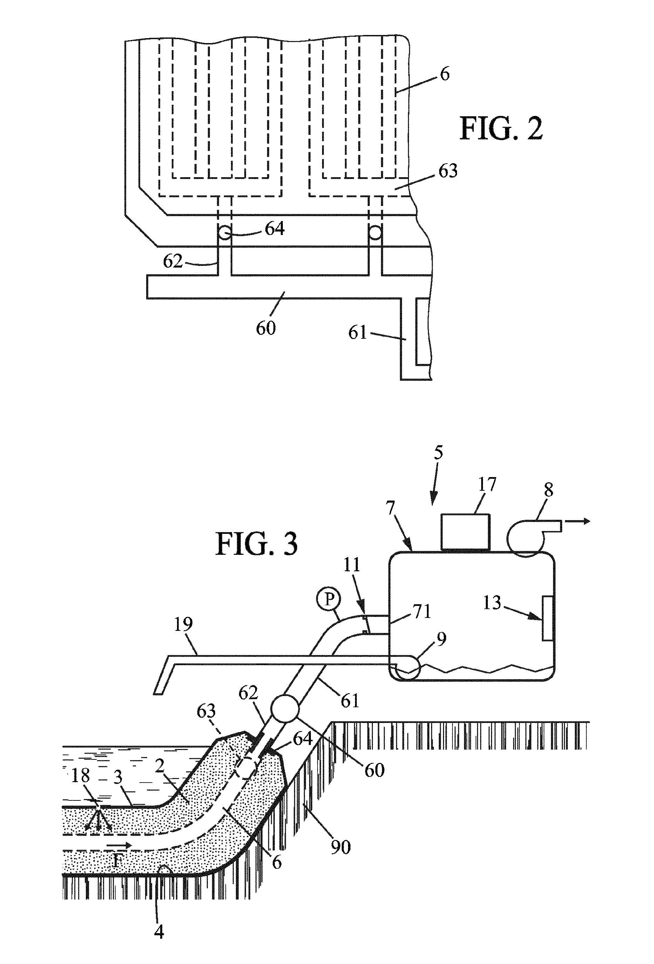

Ensuite, on procède à l'installation d'une pluralité de drains **6,** chacun disposé sensiblement horizontalement le long du fond du bassin et prolongé de part et d'autre par des portions inclinées le long des rampes de bordure. Les drains sont disposés parallèlement les uns à côté des autres comme ceci est illustré en particulier sur la figure 2. Chaque drain 6 possède une extrémité raccordée à un collecteur secondaire **63** agencé transversalement aux drains 6 sur le sable 2.

Après l'installation de la pluralité de drains 6, on rajoute du matériau drainant **2** au-dessus pour recouvrir entièrement la pluralité de drains 6.

On a ainsi formé une couche continue de matériau drainant 2 dans laquelle sont insérés les drains 6.

Ensuite, on dispose une seconde membrane, ici appelée membrane supérieure **3,** pour recouvrir le matériau drainant sur toute la surface du bassin. La bordure périphérique de la membrane supérieure 3 est alors jointe à la bordure périphérique de la membrane inférieure 4 par des soudures **23,** ce qui permet de former une enveloppe normalement étanche **20** dans laquelle on va pouvoir créer un vide d'air comme il sera vu en détail plus loin.

On remarque que, comme la couche de matériau drainant est continue, l'ensemble de la couche formée par le matériau drainant est en communication fluide par capillarité, et le positionnement précis des drains 6 n'est pas essentiel. Chaque collecteur secondaire **63** est raccordé à un collecteur primaire **60** agencé à l'extérieur de l'enveloppe étanche 20, comme cela est exposé ci-après. Chaque collecteur secondaire **63** est relié à un tuyau de passage 62 qui passe au travers d'un manchon d'étanchéité **64** agencée à la frontière entre l'intérieur de l'enveloppe étanche et l'extérieur de celle-ci, comme illustré aux figures 2 et 3.

Il faut noter que le tuyau de passage 62 peut être réalisé en deux parties, une partie interne jusqu'au manchon 64 qui peut ou pas être poreuse et une partie externe hermétique qui relie le manchon 64 au collecteur primaire 60.

Le système comprend en outre un dispositif de pompage **5** destiné à être mis en communication avec la pluralité de drains 6 pour créer un vide d'air dans l'enveloppe étanche 20 susmentionnée.

Le dispositif de pompage **5** comprend dans l'exemple illustré une enceinte close appelée chambre de séparation **7** qui inclut une entrée 71 pour les produits à pomper (air et/ou liquide), une sortie pour les produits liquides refoulés, et une sortie d'air pour l'expulsion de l'air vers l'extérieur de la chambre de séparation.

Plus précisément, une pompe de refoulement de liquide **9** prélève en partie basse de la chambre de séparation du liquide et l'expulse vers une conduite de refoulement de liquide **19.** Une pompe à air **8** aspire de l'air à l'intérieur de la chambre de séparation et expulse ledit air intérieur vers l'extérieur. Lorsque cette pompe à air est en fonctionnement, la pression régnant de l'intérieur de la chambre de séparation est inférieure à la pression atmosphérique, typiquement quelques dixièmes d'atmosphère, préférentiellement entre 1 et 3 dixième d'atmosphère, voire avantageusement moins d'un dixième d'atmosphère. La pompe à air **8** crée donc un vide d'air plus ou moins poussé dans la chambre de séparation 7.

Étant donné que la chambre de séparation est en communication fluide avec la pluralité de drains via la conduite d'entrée **61** et le collecteur **60,** il règne sensiblement la même pression de vide d'air à l'intérieur des tuyaux formant les drains, les pertes de charges le long des drains ne sont pas significatives, sinon pas problématiques. Si aucun liquide ne traverse la membrane supérieure **3** ou la membrane inférieure **4,** alors le dispositif de pompage **5** aspire uniquement de l'air en quantité très limitée à partir des drains.

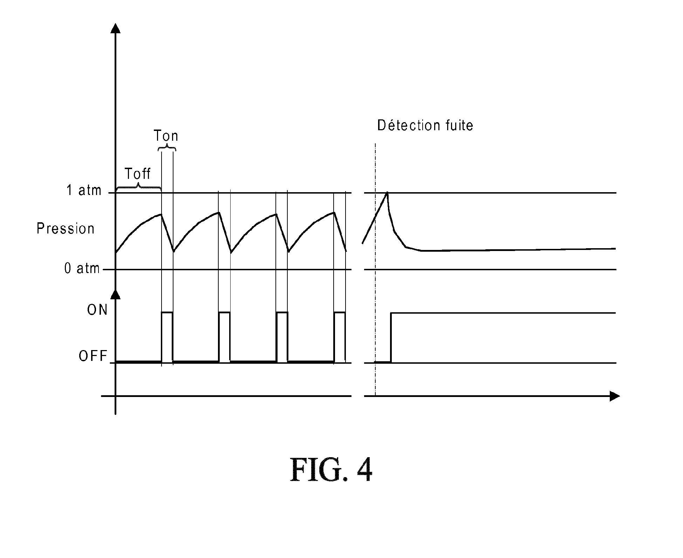

Mais, s'il s'avère qu'une fuite se formait dans la membrane supérieure **3,** comme illustré sur la figure 4 (ref **18),** alors le liquide de fuite est aspiré le long du drain (flèche **F)** et rejoint la chambre de séparation **7** via le collecteur.

La pompe de refoulement de liquide **9** refoule ensuite les liquides de fuite vers le bassin de rétention. Elle est de préférence activée uniquement lorsque un capteur de niveau de liquide **13** indique la présence du liquide dans la chambre de séparation. Le capteur de niveau de liquide 13 peut par exemple fournir une information plus élaborée qu'une information tout ou rien, par exemple ils avoir plusieurs contacteurs sur la hauteur du réservoir de manière à pouvoir pivoter le plus judicieusement possible la pompe de refoulement de liquide **9.**

Tant que les fuites restent minimes ou infimes, il n'est pas nécessaire d'activer en permanence la pompe à air, ceci peut être fait de façon cyclique avec une séquence d'activation **Ton** puis une séquence de repos **Toff** (Fig 4, partie gauche).

Avantageusement, on dispose un clapet anti retour **11** sur la conduite d'admission **61** du dispositif de pompage, ce clapet étant ouvert lorsque la pompe fonctionne, et ce clapet étant configuré pour se refermer dès que la pompe à air s'arrête de manière à maintenir le vide d'air dans le réseau de drains. On dispose un capteur de pression **12** à proximité du collecteur **60** ou de la conduite d'admission **61** pour surveiller l'évolution de la pression, notamment lorsque que la pompe est désactivée.

Avantageusement, le dispositif de pompage est agencé juste au-dessus du niveau supérieur du liquide **1,** les pertes hydrauliques sont par conséquent très limitées.

Le système comprend une unité de commande **17** en charge de l'activation de la pompe de refoulement liquide et du cyclage de l'activation de la pompe à air lorsque un tel cyclage est de mise.

Lorsqu'une une fuite significative apparaît, alors la pression dans le réseau de drains s'élève rapidement dès que la pompe à air cesse de fonctionner. Le mode de fonctionnement du système commute alors vers un mode quasi permanent ou permanent de pompage (Fig 4, partie droite).

Dans un second mode de réalisation, illustré à la figure 5, on utilise un complexe synthétique drainant **26.** Ce matériau est préfabriqué, il se présente soit sous forme de plaques peu épaisses constituées par un ou plusieurs matériaux synthétique macroporeux formant une structure autoportante soit sous forme de bandes à dérouler s'étendant sur plusieurs mètres. Ce complexe synthétique **26** remplace le sable et les drains du mode de réalisation décrit plus haut, il peut être composé d'un matériau géotextile, pas nécessairement homogène, il peut y avoir des renforts de structure combinés avec un matériau relativement poreux flexible.

Le complexe synthétique **26** est ainsi disposé de façon continue sur toute la surface du bassin entre la membrane supérieure **3** et la membrane inférieure **4** posée continûment sur le fond du bassin.

À une des extrémités longitudinales, on place un convergent débouchant sur un tuyau conventionnel de collecte, par exemple un équivalent du collecteur secondaire **63** illustré plus haut. L'ensemble des tuyaux conventionnels, collecteurs secondaires pour aller jusque à l'entrée du dispositif de pompage est identique ou similaire à ce qui a été décrit plus haut.

Le dispositif de pompage **5** et les autres éléments, en particulier les membranes inférieures et supérieures ne seront pas décrits à nouveau car ils sont identiques ou similaires à ceux qui ont été décrits plus haut.

De préférence, on installe les plaques de matériaux drainant préfabriquées les unes à côté des autres et/ou à la suite des autres pour recouvrir la totalité de la surface du fond du bassin. On peut aussi équiper les bordures inclinées du bassin avec de telles plaques. Après l'installation de toutes les plaques, on dispose la membrane supérieure que l'on soude sur sa périphérie à la membrane inférieure pour former l'enveloppe normalement étanche 20 comme décrit précédemment pour le premier mode de réalisation.

Avantageusement, le complexe synthétique drainant préfabriqué **26** présente une épaisseur limitée par exemple entre 2 cm et 10 cm d'épaisseur. Cela ne réduit pas significativement le volume disponible du bassin de rétention.

Il faut bien noter que, tant pour le cas du sable 2 que pour le cas du matériau drainant préfabriqué 26, l'installation du dispositif d'étanchéité proposé est particulièrement simple et peut être mis en oeuvre rapidement par du personnel non qualifié, et ceci quelle que soit la taille du bassin à protéger.

## Revendications

1. Système de prévention des fuites pour un bassin (10) de rétention de liquides, en particulier de liquides polluants ou contaminants, le système comprenant :
- un dispositif d'étanchéité comprenant une membrane supérieure (3) destinée à être recouverte par un produit contenant du liquide (1), une membrane inférieure (4) posée continument sur toute la surface du fondement (90) du bassin et jointe de manière étanche à la membrane supérieure sur une portion périphérique pour former ainsi une enveloppe normalement étanche (20) délimitée par les deux membranes, ladite enveloppe étant remplie d'une couche continue de matériau drainant (2),
- au moins un dispositif de pompage (5) adapté pour générer un vide d'air au moins partiel,
- une pluralité de passages (6) agencés sensiblement horizontalement dans le matériau drainant, en communication fluide avec le dispositif de pompage, pour aspirer du liquide de fuite ayant pu traverser la membrane supérieure, moyennant quoi on évite de polluer le sol environnant au cas où une fuite de liquide au travers de la membrane supérieure interviendrait.

2. Système selon la revendication 1, dans lequel le système est configuré de manière à ce que le dispositif de pompage (5) rejette/réinjecte le liquide de fuite dans le bassin de rétention (1).

3. Système selon l'une des revendications 1-2, dans lequel le système comprend un capteur de pression (12), le système étant configuré pour générer une activation cyclique du pompage (Ton,Toff), de préférence avec un rapport cyclique dépendant de l'évolution de la pression dans l'enveloppe (20).

4. Système selon l'une des revendications 1-3, comprenant en outre un collecteur entre les drains et la pompe et un clapet anti retour (11) entre le collecteur et la pompe, prévu pour se fermer dès lors que la génération de vide s'interrompt, ce qui maintient un pression de vide dans les drains, même lorsque le pompage n'est pas activé.

5. Système selon l'une des revendications 1-4, dans lequel le matériau drainant (2) est un complexe drainant préfabriqué, à base de matériau synthétique macroporeux.

6. Système selon l'une des revendications 1-4, dans lequel le matériau drainant (2) est un matériau granuleux tel que du sable.

7. Système selon la revendication 6, dans lequel les passages sont des drains sous forme de tuyaux percés ou poreux.

8. Système selon la revendication 7, dans lequel les drains sont disposés parallèlement les uns aux autres, à une distance entre 30 cm et 3m, et sont reliés à un collecteur (60) en communication avec l'admission du dispositif de pompage.

9. Système selon l'une des revendications 1-8, dans lequel le dispositif de pompage comprend une chambre de séparation (7) une pompe à vide d'air (8) et une pompe de refoulement de liquide (9), avec un capteur de niveau de liquide 13 pour piloter l'activation de la pompe de refoulement de liquide.

10. Procédé mis en oeuvre dans un système de prévention des fuites pour un bassin (10) de rétention de liquides, en particulier de liquides polluants ou contaminants, le système comprenant :
le procédé comprenant les étapes :
**a-** disposer une première membrane (4) au fond du bassin,
formant une membrane inférieure, pour couvrir tout le fond,
**b-** disposer au-dessus une couche continue de matériau drainant (2), avec des passages drainant,
**c-** disposer au-dessus une deuxième membrane (3) formant une membrane supérieure, la raccorder de manière étanche en périphérie à la première membrane pour former une enveloppe normalement étanche (20),
**d -** agencer un dispositif de pompage (5) et effectuer un pompage depuis les passages drainants.
